# EUROPEAN PATENT APPLICATION

(11) **EP 4 693 578 A1**
(43) Date of publication of application: **11.02.2026**
(21) Application number: 24800187.7
(22) Date of filing: 22.04.2024
(51) Int. Cl.: H01M 10/0583, H01M 50/46, H01M 50/457

(54) **ELECTRODE ASSEMBLY AND MANUFACTURING METHOD THEREFOR**

(30) Priority: 02.05.2023 KR 20230057042
(71) Applicant: LG Energy Solution, Ltd., Seoul 07335 (KR)
(72) Inventor: BAE, Won Sik, Daejeon 34122 (KR); LEE, So Yeong, Daejeon 34122 (KR); SUNG, Dong Wook, Daejeon 34122 (KR)
(74) Representative: Hoffmann Eitle
(86) International application number: PCT/KR2024/005396
(87) International publication number: WO 2024/228503

(57) **Abstract**

The present disclosure provides an electrode assembly including a separator bent in a zigzag shape; a negative electrode disposed between first surfaces of the separator; and a positive electrode disposed between second surfaces of the separator, wherein each of the positive electrode and the negative electrode include an upper surface and a lower surface having smaller surface bonding strength than the upper surface, and the upper surface of the positive electrode is disposed to face the upper surface of the negative electrode with the separator interposed therebetween, to provide an electrode assembly having structurally reduced bending.

## Description

### Technical Field

The present application claims the benefit of Korean Patent Application No. 10-2023-0057042 filed in the Korean Intellectual Property Office on May 2, 2023, the entire contents of which are incorporated herein by reference.

The present disclosure relates to an electrode assembly including a zigzag-shaped separator and a method for manufacturing the same.

### Background Art

An electrochemical device is to convert chemical energy into electrical energy by using an electrochemical reaction. Recently, a lithium secondary battery having a high energy density and voltage and a long cycle lifespan and capable of being used in various fields is widely used. As the demand for electric vehicles and energy storage devices are recently increased, a material and structure for maximizing the capacity and energy density are developed.

A secondary battery may include an electrode assembly including a positive electrode, a negative electrode, and a separator disposed between the positive electrode and the negative electrode. The secondary battery may be manufactured by receiving the electrode assembly in a case along with an electrolyte. The secondary batteries may be classified into a pouch type, a cylindrical type, a prismatic type, a coin type, etc. depending on a shape of the case in which the electrode assembly is received, and may be classified into a jelly-roll type, a stack type, etc. depending on a method of manufacturing an electrode assembly or a shape of the electrode assembly.

An electrode assembly using a zigzag stacking method of alternately disposing a positive electrode and a negative electrode between adjacent curves while bending a separator having a long sheet shape in a zigzag shape has recently been developed. For example, the zigzag-shaped electrode assembly may be manufactured in a way to dispose each electrode between long sheet-shaped separators by tilting or swinging a table in which the electrode assembly is stacked or folding the separator in zigzags by performing a reciprocating motion on a supply roll that transfers the separator, when the separator wound on a cylinder is supplied. The zigzag stacking has an advantage in that productivity is excellent because a process is simple compared to another type.

A separator that is used in zigzag stacking may be formed by coating coating slurry on both surfaces of a porous base. An electrode may be formed by coating active material slurry on both surfaces of an electrode current collector. The separator may have a bonding strength difference between an upper surface and lower surface of the separator due to a dry difference between the upper surface and the lower surface although both the surfaces are coated and dried simultaneously. Each active material layer is sequentially coated on the electrode and dried. A layer that is first coated may have a bonding strength difference between surfaces of the layer because the layer passes through a dry oven twice. For this reason, although coating conditions are adjusted, bonding strength may be different depending on surfaces of the separator and the electrode.

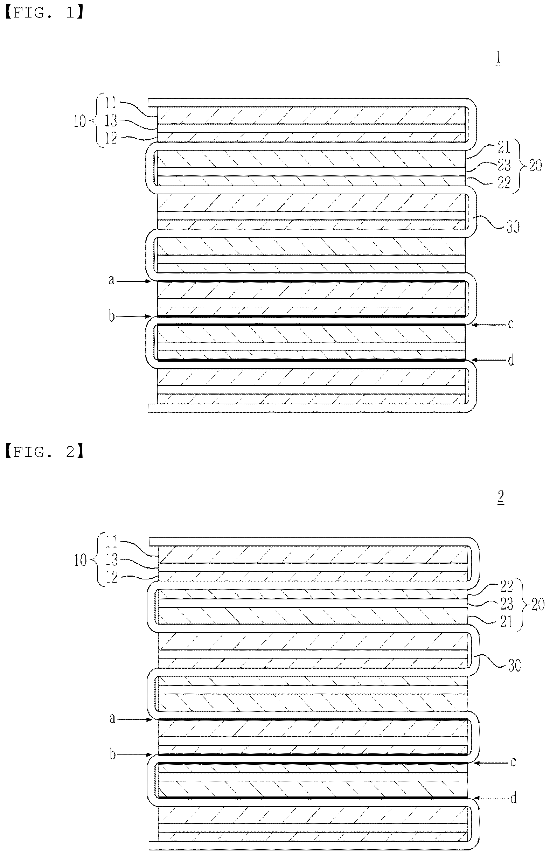

Referring to FIG. 1, a conventional zigzag-shaped electrode assembly 1 has a structure in which a negative electrode 10 and a positive electrode 20 are alternately disposed between separators 30 that have been bent in zigzags. The negative electrode 10 includes an upper surface 11 and a lower surface 12 coated on respective surfaces of a negative electrode current collector 13. The positive electrode 20 includes an upper surface 21 and a lower surface 22 coated on respective surfaces of a positive electrode current collector 23. The thickness of the upper surface of each electrode may be greater than the thickness of the lower surface, or surface bonding strength of the upper surface may be greater than surface bonding strength of the lower surface. In such a case, the lower surface 12 of the negative electrode may face the upper surface 21 of the positive electrode with the separator 30 interposed therebetween. The upper surface 11 of the negative electrode may face the lower surface 22 of the positive electrode with the separator 30 interposed therebetween. In such an arrangement, bending occurs in a manufacturing process or the bending of a manufactured zigzag-shaped electrode assembly occurs because pieces of bonding strength applied to both surfaces of the separator 30 are different. For example, bonding strength of a contact surface b and bonding strength of a contact surface c may be different, and the electrode assembly may be bent toward the contact surface c having stronger bonding strength. The bending of the electrode assembly may cause the detachment of an electrode and the separator on the surface b or may cause a safety problem due to subsequent low stiffness of an electrochemical device. If heat and pressure applied to the electrode assembly are increased in order to prevent the occurrence of the bending of the electrode assembly, the separator disposed in the skirts of the electrode assembly has problems in that the permeability of the separator is reduced and electrical resistance rises due to excessive compression.

### DISCLOSURE

### Technical Problem

An object of the present disclosure is to provide a zigzag-shaped electrode assembly having a determined arrangement structure by considering characteristics according to the coating of both surfaces of a separator and an electrode, and a method of manufacturing the same.

### Technical Solution

An aspect of the present disclosure provides an electrode assembly including a separator bent in a zigzag shape, a negative electrode disposed between first surfaces of the separator, and a positive electrode disposed between second surfaces of the separator, in which each of the positive electrode and the negative electrode includes an upper surface and a lower surface having smaller surface bonding strength than the upper surface and the upper surface of the positive electrode is disposed to face the upper surface of the negative electrode with the separator interposed therebetween.

The upper surface and the lower surface may be active material layers that are disposed to face each other with a current collector interposed therebetween.

The upper surface may be thicker than the lower surface.

The upper surface and the lower surface may each include an active material, a conductive material, and binder resin. The upper surface may have a higher content of the binder resin than the lower surface.

The first surface of the separator may have greater surface bonding strength than the second surface.

Bonding strength between the upper surface of the negative electrode and a first surface of the separator may be 0.8 to 1.2 times bonding strength between the upper surface of the positive electrode and a second surface of the separator.

Bonding strength between the upper surface of the negative electrode and a first surface of the separator may be 1.5 to 2.5 times bonding strength between the lower surface of the negative electrode and the first surface of the separator.

The electrode assembly may include n positive electrodes (n is a natural number of 1 to 60) and n+1 negative electrodes.

The separator may include a porous base, a first porous coating layer formed on one surface of the porous base, and a second porous coating layer formed on the other surface of the porous base. The first surface may be a surface of the first porous coating layer, and the second surface may be a surface of the second porous coating layer.

The porous coating layer may include inorganic particles and a polymer binder. The first porous coating layer may have a higher content of the polymer binder than the second porous coating layer.

The length of a long side of the electrode assembly may be 1.8 to 6.0 times the length of a short side thereof.

The thickness of the electrode assembly may be 8 to 20 mm.

Another aspect of the present disclosure provides an electrochemical device including the electrode assembly.

The electrochemical device may be a lithium secondary battery.

### Advantageous Effects

The zigzag-shaped electrode assembly of the present disclosure can provide a structure having reduced bending according to an electrode-separator bonding strength difference and can improve the safety of the electrochemical device including the electrode assembly because a difference between pieces of bonding strength of the electrodes bonded to both surfaces of the separator is small while maintaining an advantage of excellent productivity.

### Brief Description of Drawings

FIG. 1 is a front view of a conventional electrode assembly.
FIG. 2 is a front view of an electrode assembly according to one detailed example of the present disclosure.
FIG. 3 is a front view of an electrode assembly according to one detailed example of the present disclosure.
FIG. 4 is a conceptual diagram illustrating a process of evaluating a bending degree of a secondary battery in experiments of the present disclosure.

### Mode for Invention

Hereinafter, each component of the present disclosure is described more specifically so that a person having ordinary knowledge in the art to which the present disclosure pertains can easily practice the present disclosure, but this is merely an example and the scope of right of the present disclosure is not restricted by the following contents.

A term "include" used in this specification is used to list materials, compositions, devices, and methods which are useful in the present disclosure, and is not limited to the listed example.

"About" or "substantially" that is used in this specification is used as the category of a numerical value or degree thereof or a meaning close to the numerical value or degree by taking a unique manufacturing and material tolerance and is used to prevent an infringer from illegally using disclosed contents in which accurate or absolute numerical values provided in order to help understanding of the present disclosure are mentioned.

An "electrochemical device" that is used in this specification may mean a primary battery, a secondary battery, a super capacitor, etc.

Hereinafter, detailed examples of the present disclosure are described in detail with reference to the accompanying drawings. The drawings may be exaggerated or omitted or schematically illustrated in order to describe or highlight the contents of the detailed examples of the present disclosure.

FIG. 2 is a front view of an electrode assembly 2 according to one detailed example of the present disclosure.

Referring to FIG. 2, one detailed example of the present disclosure provides an electrode assembly 2 in which a negative electrode 10 and a positive electrode 20 have upper surfaces 11 and 21, respectively, and respective lower surfaces 12 and 22 each having smaller surface bonding strength than each of the upper surfaces 11 and 21 and the upper surface 21 of the positive electrode is disposed to face the upper surface 11 of the negative electrode with a separator 30 interposed therebetween, as an electrode assembly including the separator 30 bent in a zigzag shape, the negative electrode 10 disposed between first surfaces of the separator 30, and the positive electrode 20 disposed between second surfaces of the separator 30.

Although not illustrated, the separator 30 includes a porous base, a first porous coating layer formed on one surface of the porous base, and a second porous coating layer formed on the other surface of the porous base. A plurality of positive electrodes 20 and negative electrodes 10 may be alternately disposed while folding the separator 30 at predetermined intervals. Preferably, all of the intervals may be the same.

The porous base is a porous film in which a plurality of pores has been formed, and may be for preventing a short circuit by electrically insulating the positive electrode 20 and the negative electrode 10. For example, if an electrochemical device is a lithium secondary battery, the porous base may be a porous ion-conducting barrier capable of transmitting lithium ions while blocking an electrical contact between the positive electrode 20 and the negative electrode 10. At least a part of the pore may form a three-dimensional network through which a surface and inside of the porous base communicate with each other. A fluid may pass through the porous base through the pore.

A material that is physically and chemically stable with respect to an electrolyte, that is, an organic solvent, may be used as the porous base. For example, the porous base may include resin, such as polyolefin series such as polyethylene, polypropylene, and polybutylene, polyvinyl chloride, polyethylene terephthalate, polycycloolefin, polyethersulfone, polyamide, polyimide, polyimideamide, nylon, polytetrafluoroethylene, and a copolymer or mixture thereof, etc., but the present disclosure is not limited thereto. Preferably, polyolefin-based resin may be used as the porous base. Polyolefin-based resin is suitable for manufacturing an electrochemical device having a higher energy density because polyolefin-based resin can be processed at a relatively thin thickness and slurry for coating can be easily applied to polyolefin-based resin.

The porous base may have a single layer or multilayer structure. The porous base includes two or more polymer resin layers having different melting points (Tm), and may provide a shutdown function upon high-temperature runaway of a battery. For example, the porous base may include a polypropylene layer having a relatively high melting point and a polyethylene layer having a relatively low melting point. Preferably, the porous base may be a three-layer structure in which polypropylene, polyethylene, and polypropylene are sequentially stacked. The polyethylene layer can prevent the thermal runaway of a battery by shutting down the pore as a temperature of the battery rises to a predetermined temperature or higher.

The thickness of the porous base may be 1 *µ*m or more and 100 *µ*m or less. Specifically, the thickness of the porous base may be 10 *µ*m or more and 90 *µ*m or less, 20 *µ*m or more and 80 *µ*m or less, 30 *µ*m or more and 70 *µ*m or less, or 40 *µ*m or more and 60 *µ*m or less. Preferably, the thickness of the porous base may be 1 *µ*m or more and 30 *µ*m or less. More preferably, the thickness of the porous base may be 5 *µ*m or more and 15 *µ*m or less, or 7 *µ*m or more and 13 *µ*m or less. By adjusting the thickness of the porous base in the aforementioned range, the amount of an active material included in an electrochemical device may be increased by minimizing the volume of the electrochemical device while electrically insulating a positive electrode and a negative electrode.

The porous base may include a pore having an average diameter of 0.01 *µ*m or more and 1 *µ*m or less. Specifically, the size of the pore included in the porous base may be 0.01 *µ*m or more and 0.09 *µ*m or less, 0.02 *µ*m or more and 0.08 *µ*m or less, 0.03 *µ*m or more and 0.07 *µ*m or less, or 0.04 *µ*m or more and 0.06 *µ*m or less. Preferably, the size of the pore may be 0.02 *µ*m or more and 0.06 *µ*m or less. By adjusting the pore size of the porous base in the aforementioned range, the permeability and ions conductivity of the entire separator that is manufactured can be adjusted.

The porous base may have a permeability of 10 s/100 cc or more and 100 s/100 cc or less. Specifically, the permeability of the porous base may be 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. Preferably, the permeability of the porous base may be 50 s/100 cc or more and 70 s/100 cc or less. When the permeability of the porous base has the aforementioned range, the permeability of a separator that is manufactured may be provided to have a suitable range in which the output and cycle characteristics of an electrochemical device are secured.

The permeability (s/100 cc) means the time (second) that is taken for the air of 100 cc to pass through a porous base or a separator having a predetermined area under constant pressure. The permeability may be measured by using a Gurley densometer according to ASTM D 726-58, ASTM D726-94, or JIS-P8117. For example, the time that is taken for the air of 100 cc to pass through a 1-square inch (or 6.54 cm²) sample under pressure of 0.304 kPa of the air or pressure of 1.215 kN/m² of water may be measured by using 4110N equipment of Gurley Corporation. For example, the time that is taken for the air of 100 cc to pass through a 1-square inch sample under constant pressure water 4.8 inch at room temperature may be measured by using EG01-55-1MR equipment of Asahi Seico Co., Ltd.

The porous base may have a porosity of 10 vol% or more and 60 vol% or less. Specifically, the porosity of the porous base may be 15 vol% or more and 55 vol% or less, 20 vol% or more and 50 vol% or less, 25 vol% or more and 45 vol% or less, or 30 vol% or more and 40 vol% or less. Preferably, the porosity of the porous base may be 30 vol% or more and 50 vol% or less. When the porosity of the porous base has the aforementioned range, ions conductivity of a manufactured separator may be provided to have a suitable range in which the output and cycle characteristics of an electrochemical device are secured.

The porosity means the volume ratio of a pore for the entire volume of a porous base. The porosity may be measured by using a method that is known in the art. For example, the porosity may be measured by a Brunauer Emmett Teller (BET) measuring method using the adsorption of a nitrogen gas, a capillary flow porometer, or a water or mercury penetration method.

The porous coating layer is formed on at least one surface of the porous base and may include inorganic particles and a polymer binder. Specifically, the porous coating layer may comprehensively mean a first porous coating layer and a second porous coating layer. The electrode assembly 2 of this detailed example may use a separator in which the first porous coating layer has been formed on one surface of the porous base and the second porous coating layer has been formed on the other surface thereof. The separator 30 may be bonded to the negative electrode 10 through the first porous coating layer, and may be bonded to the positive electrode 20 through the second porous coating layer. The first porous coating layer may have one surface bonded to the porous base, and may have a first surface, that is, the other surface, bonded to the negative electrode 10. The second porous coating layer may have one surface bonded to the porous base, and may have a second surface, that is, the other surface, bonded to the positive electrode 20. If the positive electrode 20 and the negative electrode 10 are disposed while bending the separator 30 in zigzags, the negative electrode 10 may be disposed between the first surfaces, that is, surfaces of the first porous coating layer. The positive electrode 20 may be disposed between the second surfaces, that is, surfaces of the second porous coating layer.

The polymer binder may settle the inorganic particles included in the porous coating layer, and may assign bonding strength to the porous coating layer. The polymer binder may be selected from an acrylic-based polymer binder and a fluorine-based polymer binder or a combination of them.

The acrylic-based polymer binder may include, as a repetition unit, one or more monomers selected from a group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-oxyl (meth)acrylate, isooctyl(meth)acrylate, isononyl(meth)acrylate, lauryl(meth)acrylate, tetra-decyl (meth)acrylate, and pentafluorophenyl acrylate.

For example, the acrylic polymer binder may include one or more selected from a group consisting of polyacrylic acid, methyl acrylate, ethyl acrylate, isopropyl acrylate, n-butyl acrylate, isobutyl acrylate, ethylhexyl acrylate, methyl methacrylate, styrenebutadiene rubber, nitrilbutadiene rubber, acrylonitrile-butadiene rubber, and acrylonitrile-butadiene-styrene rubber.

The fluorine-based polymer binder may be one or more selected from a group consisting of polyvinylidene fluoride, polyhexafluoropropylene, polytetrafluoroethylene, polyvinylidene fluoride-hexafluoropropylene (PVDF-HFP), polyvinylidene fluoride-trichloroethylene (PVDF-TCE), and polyvinylidene fluoride-chlorotrifluoroethylene (PVDF-CTFE), and may be specifically a copolymer including polyvinylidene fluoride.

Inorganic particles that are electrochemically stable may be used as the inorganic particles. The inorganic particles are not specially limited if an oxidation and/or reduction reaction do not occur in inorganic particles in an operating voltage range (e.g., 0 to 5 V on the basis of Li/Li⁺) of an electrochemical device. In particular, if inorganic particles having a high dielectric constant are used as the inorganic particles, the ion conductivity of a liquid electrolyte can be improved by contributing to an increase of a degree of dissociation of electrolyte salts within the liquid electrolyte, for example, lithium salts. Due to the reasons, it is preferred that the inorganic particles include inorganic particles having a dielectric constant of 5 or higher, preferably, a high dielectric constant of 10 or more. Unconstrained examples of the inorganic particles having a dielectric constant of 5 or higher include BaTiO₃, Pb (Zr, Ti)O₃(PZT), b₁₋ₓLaₓZr_{1-y}Ti_{y}O₃(PLZT, 0<x<1, 0<y<1), Pb(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, SiO₂, Y₂O₃, Al₂O₃, Al{(OH)₃, SiC, AlOOH, TiO₂, or a mixture of them.

Furthermore, inorganic particles having a lithium ion transfer ability, that is, inorganic particles that contain lithium elements, but have a function for transfering lithium ions without storing lithium, may be used as the inorganic particles. Unconstrained examples of the inorganic particles having the lithium ion transfer ability include lithium phosphate (Li₃PO₄), lithium titanium phosphate (LiₓTi_{y}(PO₄)₃, 0<x <2, 0<y<3), and lithium aluminum titanium phosphate (LiₓAl_{y}Ti_{z}(PO₄)₃, 0<x<2, 0<y<1, 0<z<3), (LiAlTiP)ₓO_{y}-series glass (0<x<4, 0<y<13), such as 14Li₂O-9Al₂O₃-38TiO₂-39P₂O₅, lithium lanthanum titanate (LiₓLa_{y}TiO₃, 0<x <2, 0<y<3), lithium germanium thio phosphate (LiₓGe_{y}P_{z}S_{w}, 0<x<4, 0<y<1, 0<z<1, 0<w<5), such as Li_{3.25}Ge_{0.25}P_{0.75}S₄, lithium nitride (LiₓN_{y}, 0<x <4, 0<y<2) , such as Li₃N, SiS₂-series glass (LixSi_{y}S_{z}, 0<x<3, 0 <y<2, 0<z<4), such as Li₃PO₄-Li₂S-SiS₂, P₂S₅-series glass (LiₓP_{y}S_{z}, 0<x<3, 0<y<3, 0<z<7), such as LiI-Li₂S-P₂S₅, or a mixture of them.

Furthermore, inorganic particles that assign a flame retardant characteristic to a separator or that can prevent a temperature within an electrochemical device from suddenly rising as inorganic particles having flame resistance may be used as the inorganic particles. Unconstrained examples of the inorganic particles having flame resistance include Sb₂O₃, Sb₂O₄, Sb2O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂ and a mixture of them.

An average diameter D50 of the inorganic particles may be 10 nm or more and 10,000 nm or less. Specifically, the average diameter D50 of the inorganic particles may be 100 nm or more and 9,000 nm or less, 1,000 nm or more and 8,000 nm or less, 2,000 nm or more and 7,000 nm or less, 3,000 nm or more and 6,000 nm or less, or 4,000 nm or more and 5,000 nm or less. Preferably, the average diameter of the inorganic particles may be 100 nm or more and 700 nm or less. When the average diameter of the inorganic particles is less than 10 nm, it is disadvantageous in terms of electrical resistance because a polymer binder for a combination between inorganic particles is additionally required as a specific surface area is increased. When the average diameter of the inorganic particles is greater than 10,000 nm, the uniformity of a surface of a coating layer is reduced, and damage to a porous base or an electrode upon lamination may be caused.

The porous coating layer may include the polymer binder and the inorganic particles at a weight ratio of 20:80 to 80:20. By adjusting contents of the polymer binder and the inorganic particles in the aforementioned range, an electrode short-circuit attributable to the contraction of the separator can be prevented and bonding strength of the separator with the electrode can be secured by preventing the thermal contraction of the porous base. Specifically, the first porous coating layer may have a higher content of the polymer binder than the second porous coating layer. The first surface of the first porous coating layer may have greater bonding strength with the electrode than the second surface of the second porous coating layer.

The porous coating layer may be formed by coating coating slurry, including a polymer binder, inorganic particles, and a dispersion medium, on one surface of the porous base. The first porous coating layer and the second porous coating layer may include a polymer binder or inorganic particles that are the same or different from each other. The separator may be manufactured by applying first coating slurry for forming the first porous coating layer on one surface of the porous base and second coating slurry for forming the second porous coating layer on the other surface, drying the first coating slurry and the second coating slurry, and removing the dispersion medium. Preferably, the first coating slurry and the second coating slurry may be applied and dried simultaneously. The porous coating layer may have a porous structure including an interstitial volume in which the inorganic particles have been connected by the polymer binder. The porous coating layer may be bonded to the porous base while transmitting lithium ions, and can prevent thermal contraction of the porous base.

The coating slurry includes a dispersion medium, and may dissolve or disperse at least some of a polymer binder, and disperse the inorganic particles. Slurry in which the inorganic particles have been uniformly distributed by adjusting the type or content of the dispersion medium may be used as the coating slurry. For example, the dispersion medium may be one selected from a group consisting of water, ethanol, acetone, iso propylahcohol (IPA), dimethylacetamide (DMAc), dimethylformamide (DMF), N-methyl-2-pyrrolidone (NMP), acetonitrile, and a combination of them. Preferably, the dispersion medium may be water. A porous coating layer in which the inorganic particles have been uniformly distributed by using a dispersion medium having the type may be formed.

The coating slurry further includes additives, such as a dispersant, a surfactant, a defoaming agent, a flame retardant, and a humectant, and can improve dispersibility and flame resistance and improve the uniformity of a porous coating layer that is formed. For example, the dispersant may include one or more selected from a group consisting of oil-soluble polyamine, an oil-soluble amine compound, fatty acids, fatty alcohols, sorbitan fatty acid ester, tannic acid, and pyrogallic acid. The stability of the coating slurry can be improved and the uniformity of the porous coating layer that is formed by the coating slurry can be secured by using the dispersant having the type.

The additives of 0 wt% or more and 5 wt% or less may be included on the basis of a total weight of the coating slurry. Specifically, the additives may have a content of 0.01 wt% or more and 4 wt% or less, 0.1 wt% or more and 3 wt% or less, or 1 wt% or more and 2 wt% or less. Preferably, the content of the additives may be 3 wt% or more and 5 wt% or less. By adjusting the content of the additives in the aforementioned range, a uniform distribution and stability of the inorganic particles included in the coating slurry can be achieved.

The dispersion medium included in the coating slurry may be removed by drying or heating after the porous coating layer is formed. For example, the porous coating layer may include the dispersion medium of 5 ppm or less. Preferably, the porous coating layer may be formed of a polymer binder and inorganic particles. In a process of the dispersion medium being removed, a plurality of pores may be formed in a surface and inside of the porous coating layer. The pore may include an interstitial volume formed between the inorganic particles, and may have a structure that forms a three-dimensional network through which a fluid can pass.

The thickness of the porous coating layer may be 1 *µ*m or more and 15 *µ*m or less. Specifically, the thickness of the porous coating layer may be 2 *µ*m or more and 14 *µ*m or less, 3 *µ*m or more and 13 *µ*m or less, 4 *µ*m or more and 12 *µ*m or less, 5 *µ*m or more and 11 *µ*m or less, 6 *µ*m or more and 10 *µ*m or less, or 7 *µ*m or more and 9 *µ*m or less. By adjusting the thickness of the porous coating layer in the aforementioned range, the contraction of the porous base can be minimized and stable bonding with the porous base can be implemented. Preferably, the thickness of the first porous coating layer may be greater than the thickness of the second porous coating layer.

The separator for an electrochemical device may have the permeability of 50 s/100 cc or more and 300 s/100 cc or less. Specifically, the permeability of the separator may be 100 s/100 cc or more and 250 s/100 cc or less, or 150 s/100 cc or more and 200 s/100 cc or less. Preferably, the permeability of the separator may be 100 s/100 cc or more and 120 s/100 cc or less. When the permeability of the separator has the aforementioned range, the output, safety, and cycle characteristics of an electrochemical device can be secured.

The positive electrode 20 and the negative electrode 10 may be a positive electrode and a negative electrode that each are formed by applying and drying an electrode active material on at least one surface of each of positive electrode current collector 23 and negative electrode current collector 13. A material having conductivity while not causing a chemical change in an electrochemical device may be used as the current collector. For example, the positive electrode current collector 23 may be aluminum, nickel, titanium, calcined carbon, stainless steel; aluminum or stainless steel being surface-treated with carbon, nickel, titanium, silver, etc., but the present disclosure is not limited thereto. For example, the negative electrode current collector 13 may be copper, nickel, titanium, calcined carbon, stainless steel; copper or stainless steel being surface-treated with carbon, nickel, titanium, silver, etc., but the present disclosure is not limited thereto. The current collector may have various forms, such as a metal thin plate, a film, foil, a net, a porous material, and foam.

The positive electrode 20 includes the positive electrode current collector 23, and the positive electrode active material layers each including a positive electrode active material, a conductive material, and binder resin on both surfaces of the positive electrode current collector 23. Specifically, the positive electrode 20 includes the upper surface 21 formed on one surface of the positive electrode current collector 23 and the lower surface 22 formed on the other surface thereof. The positive electrode active material may include one of or a mixture of two or more of a layered compound, such as lithium manganese composite oxide (LiMn₂O₄, LiMnO₂, etc.), lithium cobalt oxide (LiCoO₂), or lithium nickel oxide(LiNiO₂), or a compound substituted with one or more types of transition metal; lithium manganese oxide, such as Chemical Formula Li₁₊ₓMn₂₋ₓO₄ (wherein x is 0 to 0.33), LiMnO₃, LiMn₂O₃, or LiMnO₂; lithium copper oxide (Li₂CuO₂); vanadium oxide, such as LiV₃O₈, LiV₃O₄, V₂O₅, or Cu₂V₂O₇; Ni site-type lithium nickel oxide represented as Chemical Formula LiNi₁₋ₓMₓO₂ (wherein M = Co, Mn, Al, Cu, Fe, Mg, B, or Ga, and x = 0.01 to 0.3); lithium manganese composite oxide represented as Chemical Formula LiMn₁₋ₓMₓO₂ (wherein M = Co, Ni, Fe, Cr, Zn, or Ta and x = 0.01 to 0.1) or Li₂Mn₃MO₈ (wherein M = Fe, Co, Ni, Cu, or Zn); LiMn₂O₄ in which some of Li of Chemical Formula has been substituted with alkaline earth metal ions; a disulfide compound; and Fe₂(MoO₄)₃. Preferably, the positive electrode active material may include one or more types of transition metal.

The negative electrode 10 includes the negative electrode current collector 13, and the negative electrode active material layers each including a negative electrode active material, a conductive material, and binder resin on both surfaces of the negative electrode current collector 13. Specifically, the negative electrode 10 includes the upper surface 11 formed on one surface of the negative electrode current collector 13 and the lower surface 12 formed on the other surface thereof. The negative electrode 10 may include, as a negative electrode active material, one selected from among lithium metal oxide, carbon, such as non-graphite carbon or graphite-based carbon; LixFe₂O₃(0≤x≤1), LiₓWO₂ (0≤x≤1), a silicon-based material, such as Si, SiOₓ(0<x<2), SiC, or a Si alloy; metal composite oxide such as SnₓMe₁₋ₓMe'_{y}O_{z} (Me: Mn, Fe, Pb, Ge; Me': Al, B, P, Si, Group 1, Group 2, and Group 3 elements in the periodic table, halogen; 0<x≤1; 1≤y≤3; 1≤z≤8); lithium metal; a lithium alloy; a tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; an Li-Co-Ni-based material; and titanium oxide, or a mixture of two or more of them.

The conductive material may be any one selected from a group consisting of graphite, carbon black, a carbon fiber, a metal fiber, metal powder, a conductive whisker, conductive metal oxide, a carbon nano tube, activated carbon, and a polyphenylene derivative, or a mixture of two or more conductive materials of them. A graphite sheet of the carbon nano tube has a cylinder shape having a nano size diameter, and the carbon nano tube has an sp² bonding structure and shows the characteristics of a conductor or a semiconductor depending on an angle and structure in which the graphite sheet is rolled. The carbon nano tube may be divided into a single-walled carbon nanotube (SWCNT), a doublewalled carbon nanotube (DWCNT), and a multi-walled carbon nanotube (MWCNT) depending on the bond number that forms a wall. These carbon nano tubes may be properly selected depending on the use of a dispersion solution. More specifically, it may be one selected from a group consisting of natural graphite, synthetic graphite, superp, acetylene black, ketjen black, channel black, furnace black, lamp black, summer black, denka black, aluminum powder, nickel powder, zine oxide, potassium titanate, and titanium oxide or a mixture of two or more conductive materials of them.

Binder resin that is commonly used in an electrode of an electrochemical device may be used as the binder resin. Unconstrained examples of such binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, and carboxyl methyl cellulose, but the present disclosure is not limited thereto.

Pieces of surface bonding strength of the upper surface 21 and lower surface 22 of the positive electrode 20 may be greater than pieces of surface bonding strength of the upper surface 11 and lower surface 12 of the negative electrode 10, respectively. A surface bonding strength difference between the electrode may be determined by any one or more of the thickness of each electrode and the type and content of the binder resin. For example, the positive electrode 20 may use fluorine-based binder resin as the binder resin, and the negative electrode 10 may use acrylic binder resin as the binder resin.

In the positive electrode 20 and the negative electrode 10, each of the upper surfaces 21 and 11 may have greater surface bonding strength than each of the lower surfaces 22 and 12. The lower surface may have relatively smaller bonding strength with the electrode because the lower surface has smaller surface bonding strength than the upper surface. A surface bonding strength difference between the upper surface 11, 21 and the lower surface 12, 22 may be determined by any one or more of the thickness of each layer and a content of the binder resin. Specifically, the thickness of the upper surface 11, 21 of each electrode may be greater than the thickness of the lower surface 12, 22 thereof. Alternatively, the upper surface 11, 21 of each electrode may have a higher content of the binder resin than the lower surface 12, 22. For example, bonding strength between the upper surface 11 of the negative electrode and the first surface of the separator 30 may be 1.5 to 2.5 times bonding strength between the lower surface 12 of the negative electrode and the first surface of the separator 30.

In the positive electrode 20 and the negative electrode 10, the upper surfaces 21 and 11 may be disposed to face each other with the separator 30 interposed therebetween. Referring to FIG. 2, the upper surface 11 of the negative electrode 10 may be disposed to come into contact with the first surface of the separator, and the upper surface 21 of the positive electrode 20 may be disposed to come into contact with the second surface that faces the first surface. Specifically, bonding strength of the first surface of the separator 30 may be greater than bonding strength of the second surface thereof. Surface bonding strength of the upper surface 11 of the negative electrode may be smaller than surface bonding strength of the upper surface 21 of the positive electrode.

This detailed example provides an electrode assembly in which a deviation of electrode-separator bonding strength applied to both surfaces of the separator 30 is not great by bonding the first surface of the separator 30 to the negative electrode 10 and bonding the second surface of the separator 30 to the positive electrode 20. Electrode-separator bonding strength (bonding strength of a surface a) between the upper surface 11 of the negative electrode and the first surface of the separator 30 may be 0.8 to 1.2 times electrode-separator bonding strength (bonding strength of a surface d) between the upper surface 21 of the positive electrode and the second surface of the separator 30. Specifically, the bonding strength between the upper surface 11 of the negative electrode and the first surface of the separator 30 may be 0.85 to 1.15 times, 0.9 to 1.1 times, or 0.95 to 1.05 times the bonding strength between the upper surface 21 of the positive electrode and the second surface of the separator 30. Preferably, the bonding strength between the upper surface 11 of the negative electrode and the first surface of the separator 30 may be the same as the bonding strength between the upper surface 21 of the positive electrode and the second surface of the separator 30.

It will be understood that according to the aforementioned arrangement, the lower surface 22 of the positive electrode 20 may be disposed to face the lower surface 12 of the negative electrode 10 with the separator 30 interposed therebetween. Electrode-separator bonding strength (bonding strength of a surface b) between the lower surface 12 of the negative electrode and the first surface of the separator 30 may be 0.8 to 1.2 times electrode-separator bonding strength (the bonding strength of the surface c) between the lower surface 22 of the positive electrode and the second surface of the separator 30. Specifically, the bonding strength between the lower surface 12 of the negative electrode and the first surface of the separator 30 may be 0.85 to 1.15 times, 0.9 to 1.1 times, or 0.95 to 1.05 times the bonding strength between the lower surface 22 of the positive electrode and the second surface of the separator 30. Preferably, the bonding strength between the lower surface 12 of the negative electrode and the first surface of the separator 30 may be the same as the bonding strength between the lower surface 22 of the positive electrode and the second surface of the separator 30.

In the electrode assembly 2 in which a relative arrangement between each of the negative electrode 10 and positive electrode 20 and the separator 30 has been determined as described above, a deviation of electrode-separator bonding strength is small on both surfaces on the basis of a part of the separator 30. Accordingly, the bending of the separator 30 does not occur or can be reduced although a total thickness of an electrode assembly is increased because a plurality of electrodes is stacked. For example, in the conventional electrode assembly 1 such as FIG. 1, if the number of positive electrodes is approximately 30 or more, the bending of the separator 30 may occur or the detachment of an electrode may occur because an electrode-separator bonding strength deviation on both surfaces of the separator 30 is increased despite thermal compression for the electrode assembly. The electrode assembly 2 according to this detailed example includes n positive electrode 20 (n is a natural number of 1 to 60) and n+1 negative electrodes 10, and can prevent the bending and the detachment of an electrode because a balance of electrode-separator bonding strength on both surfaces of the separator is maintained although a larger number of electrodes are stacked.

The length of a long side of the electrode assembly 2 may be 1.8 to 6.0 times the length of a short side thereof. The thickness of the electrode assembly 2 may be 8 to 20 mm. The electrode assembly 2 having the size of the aforementioned range is suitable for being receiving in an electric vehicle because the electrode assembly has excellent safety through the prevention of the bending.

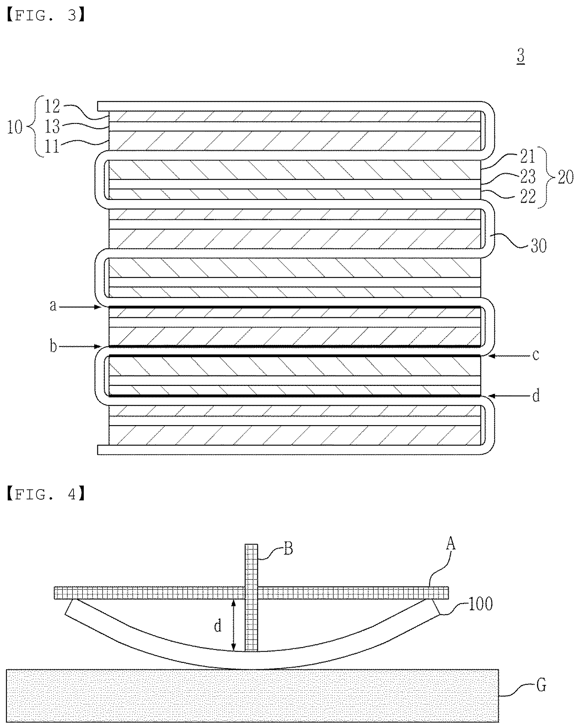

FIG. 3 is a front view of an electrode assembly 3 according to another detailed example of the present disclosure. The same contents as those of the electrode assembly 2 of FIG. 2 are replaced with those of the previous detailed example.

Referring to FIG. 3, in the electrode assembly 3, both stack directions of the positive electrode 20 and the negative electrode 10 may be opposite to those of the electrode assembly 2 of the previous detailed example. Even in such a case, the upper surface 11 of the negative electrode may be disposed to face the upper surface 21 of the positive electrode with the separator 30 interposed therebetween. Electrode-separator bonding strength (bonding strength of a surface b) between the upper surface 11 of the negative electrode and the first surface of the separator 30 may be 0.8 to 1.2 times electrode-separator bonding strength (bonding strength of a surface c) between the upper surface 21 of the positive electrode and the second surface of the separator 30. Specifically, the bonding strength between the upper surface 11 of the negative electrode and the first surface of the separator 30 may be 0.85 to 1.15 times, 0.9 to 1.1 times or 0.95 to 1.05 times the bonding strength between the upper surface 21 of the positive electrode and the second surface of the separator 30, and may be preferably the same.

It will be understood that according to the aforementioned arrangement, the lower surface 22 of the positive electrode 20 may be disposed to face the lower surface 12 of the negative electrode 10 with the separator 30 interposed therebetween. Electrode-separator bonding strength (bonding strength of a surface a) between the lower surface 12 of the negative electrode and the first surface of the separator 30 may be 0.8 to 1.2 times the electrode-separator bonding strength (bonding strength of a surface d) between the lower surface 22 of the positive electrode and the second surface of the separator 30, and may be preferably the same.

In the electrode assembly 3 in which a relative arrangement between each of the electrodes 10 and 20 and the separator 30 has been determined as described above, a deviation of electrode-separator bonding strength is small on both surfaces on the basis of a part of the separator 30. Accordingly, the bending of the separator 30 does not occur or can be reduced although a total thickness of an electrode assembly is increased because a plurality of electrodes is stacked.

Another detailed example of the present disclosure provides an electrochemical device including the electrode assembly 2, 3 according to the aforementioned one detailed example. The electrochemical device may be manufactured by inserting one or more electrode assemblies 2, 3 into a case or a pouch and sealing the case or the pouch. The electrode assembly may be impregnated with an electrolyte by injecting the electrolyte before the case or the pouch is sealed. A shape of the case or the pouch is not limited. For example, the electrochemical device may be cylindrical, prismatic, coin type, or pouch type lithium secondary battery.

The electrolyte is a salt having a structure such as that of A⁺B⁻, which is obtained by dissolving or dissociating a salt in which A⁺ includes ions composed of alkali metallic cations, such as Li⁺, Na⁺, or K⁺, or a combination of them and B⁻ includes ions composed of anions, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination of them, in an organic solvent consisting of propylene carbonate (PC), ethylene carbonate (EC), diethyl carbonate (DEC), dimethyl carbonate (DMC), dipropylcarbonate (DPC), dimethyl sulfoxide, acetonitrile, dimethoxyethane, diethoxyethane, tetrahydrofuran, N-methyl-2-pyrrolidone (NMP), thyl methyl carbonate (EMC), or gamma butyrolactone (γ-butyrolactone) or a mixture of them, but the present disclosure is not limited thereto only.

An electrochemical device including the electrode assembly may be a lithium secondary battery. The battery may be used as a unit cell, and may be used as a battery module including a unit cell, a battery pack including a battery module, and an apparatus including a battery pack as a power source. The apparatus may include small-sized apparatuses, such as a computer, a mobile phone, and a power tool, and electric vehicles including an electric vehicle (EV), a hybrid electric vehicle (HEV) , and a plugin hybrid electric vehicle (PHEV) which are moved by electric power from an electric motor; electric two-wheel vehicles including an electric bicycle (E-bike) and an electric scooter (E-scooter); an electric golf cart; and a middle and large-sized apparatus such as a system for power storage, but the present disclosure is not limited thereto.

Still another detailed example of the present disclosure provides, as a method of manufacturing the electrode assembly 2, a method including (S10) forming a stack body by alternately disposing the positive electrode 20 and the negative electrode 10 between the separators 30 while folding the separator in zigzags, and (S20) manufacturing the electrode assembly 2 by applying heat and pressure to the stack body. The same contents as those of the electrode assembly 2, among descriptions relating to the method of manufacturing the electrode assembly 2, are replaced with the description of the previous detailed example.

Step S10 is a step of forming the stack body by alternately disposing the positive electrode 20 and the negative electrode 10 between bent parts that are formed while folding the separator 30 in zigzags fold. The length of the separator 30 in a length direction (or a machine direction (MD)) thereof may be greater than the length of the separator in a width direction (or a transverse direction (TD)) thereof. The separator 30 may be folded in zigzags at predetermined intervals in the MD direction. The positive electrode 20 and the negative electrode 10 may be disposed to be arranged so that the upper surface 21 of the positive electrode and the upper surface 11 of the negative electrode face each other with the separator 30 interposed therebetween. The separator 30 may include the first surface and the second surface having smaller surface bonding strength than the first surface. The negative electrode 10 may be disposed between the first surfaces, and the positive electrode 20 may be disposed between the second surfaces.

The separator 30, the positive electrode 20, and the negative electrode 10 may each have a rectangular shape, but the present disclosure is not limited thereto. For example, the separator 30, the positive electrode 20, and the negative electrode 10 may have a rectangular shape in which the length in the MD direction is longer than the length in the TD direction. The positive electrode 20 and the negative electrode 10 may each be disposed in a plural number in the MD direction of the separator 30. The separator 30, and the positive electrode 20 and the negative electrode 10 may be disposed so that the MD direction of the separator 30 and the TD direction of the positive electrode 20 and the negative electrode 10 are parallel to each other. Preferably, the positive electrode 20 and the negative electrode 10 may be arranged so that the center lines of the positive electrode and the negative electrode in the TD direction are identical with each other.

Step S20 is a step of manufacturing the electrode assembly 2 in which the positive electrode 20 and the separator 30, and the negative electrode 10 and the separator 30 have been bonded by thermally compressing the stack body formed in Step S10. The thermal compression may include compressing the top and bottom of the stack body by using a press apparatus, and may include applying pressure of 1 to 7 MPa to one or more stack bodies for 1 to 30 seconds at a temperature of 45 to 80°C. By adjusting temperature and pressure conditions for the thermal compression in the aforementioned range, the uniform bonding of the separator 30 and the negative electrode 10 and positive electrode 20 that constitute the stack body can be implemented without causing damage to the stack body. The type of press apparatus is not limited if the press apparatus can bond the separator and the electrodes by applying heat and pressure to one surface or both surfaces of the stack body simultaneously or at different times while maintaining the arrangement of the separator and the electrodes included in the stack body.

Preferably, the thermal compression may be divided into two or more steps. Step S20 may include first thermal compression for fixing relative locations of the negative electrode 10 and positive electrode 20 with respect to the separator 30 by applying pressure of 1 to 6 MPa for 1 to 30 seconds at 45 to 65°C and second thermal compression for fully bonding the separator 30 and the negative electrode 10 and positive electrode 20 by applying pressure of 1 to 7 MPa for 1 to 30 seconds at 50 to 80 °C . The first thermal compression may include fixing the locations of the negative electrode 10 and positive electrode 20 by partially bonding the separator 30 and neighbor negative electrode 10 and positive electrode 20. The second thermal compression may include manufacturing the electrode assembly 2 by fully bonding the separator 30 and the negative electrode 10 and positive electrode 20 at locations that are determined through the first thermal compression. Through the first thermal compression and the second thermal compression, the electrode assembly 2 that has excellent arrangement and in which the bonding of the electrode-separator has been uniformly formed compared to a single step thermal compression may be manufactured. Through the first thermal compression and the second thermal compression, excellent production efficiency can be achieved because damage to the separator 30 is prevented by reducing thermal compression conditions compared to the single step thermal compression.

Hereinafter, the present disclosure is descried more specifically through detailed Embodiments and Experiment Examples. The Embodiments and Experiment Examples below are for exemplifying the present disclosure, and the present disclosure is not restricted by the Embodiments and Experiment Examples below.

### Example 1

A separator having a thickness of 15 *µ*m, which was manufactured by coating coating slurry, including inorganic particles and a polymer binder, on a polyethylene base having a thickness 9 *µ*m, and 30 positive electrodes each having a 90 mm × 315 mm size and a thickness of 125 *µ*m (the thickness of an upper surface: 60 *µ*m, and the thickness of a lower surface: 50 *µ*m) and 31 negative electrodes each having a 95.5 mm × 320 mm size and a thickness of 150 *µ*m (the thickness of an upper surface: 75 *µ*m , and the thickness of a lower surface: 65 *µ*m) were prepared. A stack body was prepared by disposing the upper surface of the negative electrode and the upper surface of the positive electrode so that the upper surfaces face each other with the separator interposed therebetween while folding the separator in zigzags at intervals of 98.5 mm. An electrode assembly having a shape, such as that in FIG. 2, was manufactured by holding the stack body in a press apparatus, thermally compressing the stack body for 1 second at 60°C and pressure of 6 MPa, and then thermally compressing the stack body for 1 second at 70°C and pressure of 6 MPa.

The assembly of a secondary battery was completed by inputting the electrode assembly into a case by using a pouch exterior-material of a laminate sheet of CPP/aluminum/nylon as the case, injecting an ethyl methyl carbonate (EMC) electrolyte including LiPF₆, and thermally fusing the pouch exterior-material.

Thereafter, a heating press process prior to activation and an activation process were performed on the secondary battery. The heating press process was performed for 5 minutes under temperature and pressure conditions of 30°C and 3.0 kgf/cm². The activation process was performed by charging the secondary battery with 0.5 C under temperature and pressure conditions of 50°C and 1.0 kgf/cm².

### Example 2

An electrode assembly having a shape, such as that in FIG. 3, and a secondary battery were manufactured through the same method as that of Example 1, except that both stack directions of the positive electrode and the negative electrode are opposite.

### Comparative Example 1

An electrode assembly having a shape, such as that in FIG. 1, and a secondary battery were manufactured through the same method as that of Example 1, except that the upper surface of the negative electrode and the lower surface of the positive electrode are disposed to face each other with the separator interposed therebetween.

### Example 3

**An** electrode assembly and a secondary battery were manufactured by using the same method as that of Example 1, except that electrodes in which a long side of a negative electrode was 525 mm and a long side of a positive electrode was 520 mm were used.

### Comparative Example 2

An electrode assembly and a secondary battery were manufactured by using the same method as that of Comparative Example 1, except that electrodes in which a long side of a negative electrode was 525 mm and a long side of a positive electrode was 520 mm were used.

### Comparative Example 3

An electrode assembly and a secondary battery were manufactured by using the same method as that of Comparative Example 1, except that 68 positive electrodes and 69 negative electrodes were used.

### Comparative Example 4

An electrode assembly and a secondary battery were manufactured by using the same method as that of Comparative Example 1, except that electrodes in which a long side of a negative electrode was 605 mm and a long side of a positive electrode was 600 mm were used.

### Experiment Example

### Check bonding strength of electrode-separator

Electrode-separator bonding strength on the surfaces a to d of each of the electrode assemblies manufactured in the Embodiments and the Comparative Examples was checked with reference to FIGS. 1 to 3.

Bonding strength when the electrode was peeled off from the separator, while peeling off the electrode from the surfaces a to d of each electrode assembly layer by layer at a speed of 200 mm/min at 90°, was measured and arranged in Table 1.

### Check bonding of secondary battery

A method of evaluating the bending level of the secondary battery is described with reference to FIG. 4. A secondary battery 100 including the electrode assembly of each of the Embodiments and the Comparative Examples on which an activation process was completed may have a shape in which one surface thereof has been concavely bent. As illustrated in FIG. 4, the secondary battery 100 was disposed on a flat surface G so that the concaved surface was directed toward an upper side. A first ruler A was disposed at both ends of the concaved surface, and a second ruler B was disposed in a direction perpendicular to the first ruler A. The longest distance d (mm) between the secondary battery 100 and the first ruler A was evaluated as the bending level and indicated in Table below. The secondary battery may be evaluated as being excellent when the bending level of the secondary battery is less than 5 mm.

**[Table 1]**

| | | Exam ple 1 | Exam ple 2 | Compar ative Exampl e 1 | Exam ple 3 | Compar ative Exampl e 2 | Compar ative Exampl e 3 | Compar ative Exampl e 4 |
|---|---|---|---|---|---|---|---|---|
| Number of electrodes (positive electrode/ne gative electrode) | | 30/3 1 | 30/3 1 | 30/31 | 30/3 1 | 30/31 | 68/69 | 30/31 |
| Thickness (mm) of electrode assembly | | 9.3 | 9.3 | 9.3 | 9.3 | 9.3 | 20.9 | 9.3 |
| Long side/short side ratio of electrode assembly | | 3.3 | 3.3 | 3.3 | 5.4 | 5.4 | 3.3 | 6.3 |
| Bonding | a | 10 | 5 | 10 | 10 | 10 | 10 | 10 |
| strength (gf/25mm) of electrode separator | b | 5 | 10 | 5 | 5 | 5 | 5 | 5 |
| | c | 5 | 10 | 10 | 5 | 10 | 10 | 10 |
| | d | 10 | 5 | 5 | 10 | 5 | 5 | 5 |
| Whether bending occurred | | × | × | ○ | × | ○ | ○ | ○ |
| Bending level (mm) | | 2 | 3 | 10 | 3 | 11 | 13 | 12 |

### [Description of reference numerals]

1, 2, 3: electrode assembly
10: negative electrode 11: upper surface of negative electrode
12: lower surface of negative electrode 13: current collector for negative electrode
20: positive electrode 21: upper surface of positive electrode
22: lower surface of positive electrode 23: current collector for positive electrode
30: separator
100: secondary battery
A: first ruler B: second ruler

## Claims

1. An electrode assembly comprising:
a separator bent in a zigzag shape;
a negative electrode disposed between first surfaces of the separator; and
a positive electrode disposed between second surfaces of the separator,
wherein each of the positive electrode and the negative electrode comprises an upper surface and a lower surface having smaller surface bonding strength than the upper surface, and
the upper surface of the positive electrode is disposed to face the upper surface of the negative electrode with the separator interposed therebetween.

2. The electrode assembly of claim 1, wherein the upper surface and the lower surface are active material layers that are disposed to face each other with a current collector interposed therebetween.

3. The electrode assembly of claim 1, wherein the upper surface is thicker than the lower surface.

4. The electrode assembly of claim 1, wherein
the upper surface and the lower surface each comprise an active material, a conductive material, and binder resin, and
the upper surface has a higher content of the binder resin than the lower surface.

5. The electrode assembly of claim 1, wherein the first surface of the separator has greater surface bonding strength than the second surface.

6. The electrode assembly of claim 1, wherein bonding strength between the upper surface of the negative electrode and the first surface of the separator is 0.8 to 1.2 times bonding strength between the upper surface of the positive electrode and the second surface of the separator.

7. The electrode assembly of claim 1, wherein bonding strength between the upper surface of the negative electrode and the first surface of the separator is 1.5 to 2.5 times bonding strength between the lower surface of the negative electrode and the first surface of the separator.

8. The electrode assembly of claim 1, wherein the electrode assembly comprises n positive electrodes (n is a natural number of 1 to 60) and n+1 negative electrodes.

9. The electrode assembly of claim 1, wherein
the separator comprises a porous base, a first porous coating layer formed on one surface of the porous base, and a second porous coating layer formed on the other surface of the porous base, and
the first surface is a surface of the first porous coating layer, and the second surface is a surface of the second porous coating layer.

10. The electrode assembly of claim 9, wherein
the porous coating layer comprises inorganic particles and a polymer binder, and
the first porous coating layer has a higher content of the polymer binder than the second porous coating layer.

11. The electrode assembly of claim 1, wherein a length of a long side of the electrode assembly is 1.8 to 6.0 times a length of a short side thereof.

12. The electrode assembly of claim 1, wherein a thickness of the electrode assembly is 8 to 20 mm.
